# EUROPEAN PATENT APPLICATION

(11) **EP 4 583 290 A1**
(43) Date of publication of application: **09.07.2025**
(21) Application number: 23909162.2
(22) Date of filing: 02.08.2023
(51) Int. Cl.: H01M 50/342, H01M 10/0525, H01M 10/054, H01M 50/593, H01M 50/186

(54) **BATTERY CELL AND ELECTRIC DEVICE**

(30) Priority: 31.12.2022 CN 202211736844
(71) Applicant: Ningde Amperex Technology Limited, Ningde, Fujian 352100 (CN)
(72) Inventor: ZHANG, Guowen, Ningde, Fujian 352100 (CN)
(74) Representative: Icosa
(86) International application number: PCT/CN2023/110827
(87) International publication number: WO 2024/139220

(57) **Abstract**

Some embodiments of this application provide a battery cell and an electric apparatus, and relate to the field of battery technologies. The battery cell includes a housing and a pressure relief mechanism. The housing is provided with a first through hole and the pressure relief mechanism covers the first through hole. The pressure relief mechanism includes an adhesive film, and the adhesive film can be heated and melted to form a pressure relief channel connecting the inside and outside of the housing. The pressure relief mechanism has good thermal sensitivity, allowing for highly reliable pressure relief, thus improving the safety of the battery cell. In addition, as compared with the pressure relief mechanism with engraved grooves, no large space needs to be reserved in some embodiments, allowing for a more compacted structure of the electric apparatus and lower preparation costs of the pressure relief mechanism.

## Description

### CROSS-REFERENCE TO RELATED APPLICATIONS

This application claims priority to Chinese Patent Application No. 202211736844.3, filed on December 31, 2022 and entitled "BATTERY CELL AND ELECTRIC APPARATUS", which is incorporated herein by reference in its entirety.

### TECHNICAL FIELD

This application relates to the field of battery technologies, and specifically to a battery cell and an electric apparatus.

### BACKGROUND

With the rapid development of new energy technologies, batteries have been widely applied in various fields such as electronic devices, electric vehicles, electric bicycles, and electric tools. Increasingly high requirements are imposed on battery quality, safety, and miniaturization.

Currently, in order to enhance safety, steel-shell battery cells are usually provided with laser-engraved grooves in housing covers, allowing for pressure relief in case of an excessively large pressure inside the battery cells. An electric apparatus mounted with steel-shell battery cells needs to reserve large valve opening spaces corresponding to the engraved grooves, resulting in a large overall space occupied by the electric apparatus. Moreover, the engraved groove has poor thermal sensitivity, resulting in lower reliability of pressure relief and impacting the safety of the battery cell, and the laser-engraved grooves also increase the preparation costs of the battery cells.

### SUMMARY

Some embodiments of this application are intended to provide a battery cell and an electric apparatus. The battery cell provided by some embodiments of this application can improve the reliability of pressure relief for the battery cell and increase the space utilization of the electronic apparatus.

This application is implemented using the following technical solutions.

According to a first aspect, an embodiment of this application provides a battery cell including:
a housing, where the housing is provided with a first through hole; and
a pressure relief mechanism covering the first through hole, where the pressure relief mechanism includes an adhesive film, the adhesive film being capable of being heated and melted to form a pressure relief channel connecting the inside and outside of the housing.

In the foregoing technical solution, as the pressure relief mechanism including the adhesive film covers the first through hole of the housing, the adhesive film can be heated and melted to form a pressure relief channel connecting the inside and outside of the housing. The pressure relief mechanism has good thermal sensitivity, allowing for highly reliable pressure relief, thus improving the safety of the battery cell. In addition, as compared with the pressure relief mechanism with engraved grooves, no large space needs to be reserved in this embodiment, allowing for a more compacted structure of the electric apparatus and lower preparation costs of the pressure relief mechanism.

In some embodiments, the first through hole is an electrolyte injection hole.

In the foregoing technical solution, the electrolyte injection hole is reused as the first through hole for pressure relief. This can further simplify the preparation process of the battery cell and reduce the preparation costs of the battery cell.

In some embodiments, the housing includes a bottom wall and multiple side walls surrounding the bottom wall, the battery cell further includes a pole, and the pole and the first through hole are provided on one of the side walls.

In the foregoing technical solution, when the battery cell is placed in the electric apparatus, a space needs to be reserved for electrical connection between the pole and another component of the electric apparatus. Therefore, the pole and the first through hole are provided on one of the side walls, no space needs to be additionally reserved for the first through hole, so as to relieve pressure, further saving the space of the electric apparatus, thus allowing for a more compacted structure of the electric apparatus.

In some embodiments, the adhesive film is attached to the housing, and a portion of the adhesive film attached to the housing has a width of W satisfying 0.2 mm≤W≤2 mm.

In the foregoing technical solution, with the width W of the portion of the adhesive film attached to the housing set to be 0.2 mm to 2 mm, the pressure relief path of the battery cell is short when thermal runaway occurs, the battery cell has high pressure relief sensitivity, and it is more reliable for the adhesive film to seal the first through hole. If W is small (for example, being smaller than 0.2 mm), it is less reliable for the adhesive film to seal the first through hole; and if W is large (for example, being greater than 2 mm), the pressure relief path is long, causing low sensitivity of pressure relief for the battery cell.

In some embodiments, 0.3 mm≤W≤1 mm.

In the foregoing technical solution, with the width W of the portion of the adhesive film attached to the housing set to be 0.3 mm to 1 mm, the pressure relief path of the battery cell is short when thermal runaway occurs and the battery cell has high pressure relief sensitivity.

In some embodiments, the pressure relief mechanism further includes a first metal sheet, the first metal sheet being disposed on a side of the adhesive film back away from the housing.

In the foregoing technical solution, with the first metal sheet disposed on a side of the adhesive film back away from the housing, the water permeation area of the adhesive film can be reduced, allowing for a better sealing effect.

In some embodiments, the first metal sheet is circular, and the adhesive film is circular.

In the foregoing technical solution, the first metal sheet being circular is conducive to the assembly between the first metal sheet and the adhesive film, and the adhesive film being circular allows for a better sealing effect.

In some embodiments, the first metal sheet is circular and the adhesive film is annular. The first metal sheet being circular is conducive to the assembly between the first metal sheet and the adhesive film, and the adhesive film being annular is conducive to increasing the quantity of the pressure relief channels, allowing for a better pressure relief effect.

In some embodiments, the first through hole is circular, diameter of the first metal sheet is smaller than or equal to outer diameter of the adhesive film, and the diameter of the first metal sheet is greater than diameter of the first through hole.

In the foregoing technical solution, the diameter of the first metal sheet being smaller than or equal to the outer diameter of the adhesive film is further conducive to the assembly between the first metal sheet and the adhesive film. The diameter of the first metal sheet being greater than the diameter of the first through hole allows the first metal sheet to completely cover the first through hole, allowing for a better sealing effect.

In some embodiments, the pressure relief mechanism further includes a second metal sheet, where the second metal sheet is disposed between the adhesive film and the housing, the second metal sheet is welded to the housing, and the second metal sheet is provided with a second through hole.

In the foregoing technical solution, the second metal sheet being welded to the housing allows for more stable connection between the pressure relief mechanism and the housing, allowing for a better sealing effect.

In some embodiments, the adhesive film includes a first adhesive layer and a second adhesive layer, where the first adhesive layer and the second adhesive layer are stacked, the second adhesive layer is located on a side of the first adhesive layer back away from the housing, and a melting point of the first adhesive layer is lower than a melting point of the second adhesive layer.

In the foregoing technical solution, as the first adhesive layer and the second adhesive layer are provided and the melting point of the first adhesive layer is lower than the melting point of the second adhesive layer, when the adhesive film is activated by high temperature, the first adhesive layer can be melted to attach to the housing, and the second adhesive layer is not melted, preventing the overmelting of the adhesive film from impacting the mounting of the adhesive film and reducing the amount of adhesive overflow.

In some embodiments, the melting point of the first adhesive layer is T1 satisfying 100°C≤T1≤130°C.

In the foregoing technical solution, with the melting point of the first adhesive layer set to be 100°C to 130°C, when thermal runaway occurs in the battery cell, the first adhesive layer can be melted to form the pressure relief channel. If T1 is low (for example, being lower than 100°C), the first adhesive layer may be melted before thermal runaway has not occurred in the battery cell, resulting in low reliability of the adhesive film for sealing the first through hole. If T1 is high (for example, being higher than 130°C), the first adhesive layer is less likely to melt when thermal runaway occurs in the battery cell, causing low sensitivity of pressure relief for the battery cell.

In some embodiments, 110°C≤T1≤125°C.

In the foregoing technical solution, with the melting point of the first adhesive layer set to be 110°C to 125°C, it is more accurate to control thermal runaway of the battery cell.

In some embodiments, the melting point of the second adhesive layer is T2 satisfying 140°C≤T2≤190°C.

In the foregoing technical solution, with the melting point of the second adhesive layer set to be 140°C to 190°C, when the first adhesive layer is melted, the second adhesive layer is not melted. If T2 is low (for example, being lower than 140°C), when the adhesive film is activated by high temperature, the first adhesive layer and the second adhesive layer may be melted simultaneously into one, making it difficult to mount the adhesive film. If T2 is high (for example, being higher than 190°C), the second adhesive layer is also less likely to melt when thermal runaway occurs in the battery cell, causing low sensitivity of pressure relief for the battery cell.

In some embodiments, 150°C≤T2≤170°C.

In the foregoing technical solution, with the melting point of the second adhesive layer set to be 150°C to 170°C, it is more accurate to control thermal runaway of the battery cell 10.

In some embodiments, the adhesive film further includes a third adhesive layer, where the third adhesive layer is located between the second adhesive layer and the first metal sheet, and a melting point of the third adhesive layer is lower than the melting point of the second adhesive layer.

In the foregoing technical solution, through the arrangement of the third adhesive layer, with the melting point of the third adhesive layer lower than the melting point of the second adhesive layer, when the adhesive film is activated by high temperature, the third adhesive layer can be melted to attach to the first metal sheet. In addition, the second adhesive layer is not melted, preventing the overmelting of the adhesive film from impacting the mounting of the first metal sheet, thus reducing the amount of adhesive overflow.

In some embodiments, the melting point of the third adhesive layer is T3 satisfying 100°C≤T3≤130°C.

In the foregoing technical solution, with the melting point of the third adhesive layer set to be 100°C to 130°C, when thermal runaway occurs in the battery cell, the third adhesive layer can be melted to form the pressure relief channel between it and the first metal sheet. If T3 is low (for example, being lower than 100°C), the third adhesive layer may be melted before thermal runaway has not occurred in the battery cell, resulting in low reliability of the adhesive film for sealing the first through hole. If T3 is high (for example, being greater than 130°C), the third adhesive layer is less likely to melt when thermal runaway occurs in the battery cell, causing low sensitivity of pressure relief for the battery cell.

In some embodiments, 110°C≤T3≤125°C.

In the foregoing technical solution, with the melting point of the third adhesive layer set to be 110°C to 125°C, it is more accurate to control thermal runaway of the battery cell.

In some embodiments, the adhesive film has a thickness of H satisfying 0.05 mm≤H≤1 mm.

In the foregoing technical solution, with the thickness of the adhesive film set to be 0.05 mm to 1 mm, the adhesive film is not easily damaged and permeable, and has a good pressure relief effect. If H is small (for example, being smaller than 0.05 mm), the adhesive film is easily damaged and highly permeable. If H is large (for example, being greater than 1 mm), the adhesive film is less likely to melt when thermal runaway occurs in the battery cell, causing low sensitivity of pressure relief for the battery cell.

In some embodiments, 0.1 mm≤H≤0.3 mm.

In the foregoing technical solution, with the thickness of the adhesive film satisfying 0.1 mm≤H≤0.3 mm, the adhesive film is not easily damaged and permeable, and has a good pressure relief effect.

In some embodiments, a thickness ratio of the first adhesive layer, the second adhesive layer, and the third adhesive layer is 1:0.5:1 to 1:3:1.

In the foregoing technical solution, as the thickness ratio of the first adhesive layer, the second adhesive layer, and the third adhesive layer is set to be 1:0.5:1 to 1:3:1, the second adhesive layer can provide good support, with a small effect on the pressure relief of the adhesive film. If the second adhesive layer is thin (for example, being smaller than half thickness of the first adhesive layer), the second adhesive layer cannot provide good support, which does not help an adhesive application apparatus provide support for the second adhesive layer in the process of melting the first adhesive layer, where such support avoids displacement of the adhesive film, and the second adhesive layer is easy to damage. If the second adhesive layer is thick (for example, being greater than three times the thickness of the first adhesive layer), the melting of the first adhesive layer may be affected, thus impacting the sensitivity of pressure relief for the battery cell.

In some embodiments, the first through hole is circular, and the first through hole has a diameter of D satisfying 0.5 mm≤D≤2 mm.

In the foregoing technical solution, with the diameter of the first through hole set to be 0.5 mm to 2 mm, when thermal runaway occurs in the battery cell, the first through hole can provide a pressure relief channel with a large cross-section area, facilitating the mounting of the pressure relief mechanism. If D is small (for example, being smaller than 0.5 mm), the pressure relief channel formed by melting the adhesive film when thermal runaway occurs in the battery cell has a small cross-section area, and the gas in the housing may be not released in a timely manner, causing low safety of the pressure relief for the battery cell. If D is large (for example, being greater than 2 mm), a pressure relief mechanism with a large area is required to cover the first through hole, making it difficult to mount the pressure relief mechanism.

In some embodiments, 0.9 mm≤D≤1.6 mm.

In the foregoing technical solution, with the diameter of the first through hole set to be 0.9 mm to 1.6 mm, it is further possible that when thermal runaway occurs in the battery cell, the first through hole can provide a pressure relief channel with a large cross-section area, facilitating the mounting of the pressure relief mechanism.

According to a second aspect, an embodiment of this application provides an electric apparatus, including the battery cell described above, where the battery cell is configured to supply electric energy.

### BRIEF DESCRIPTION OF DRAWINGS

To describe the technical solutions of some embodiments of this application more clearly, the following briefly describes the accompanying drawings required for describing some embodiments this application. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic top view of a partial structure of an electric apparatus according to some embodiments of this application;
FIG. 2 is a schematic diagram of a three-dimensional structure of a battery cell according to some embodiments of this application;
FIG. 3 is a schematic diagram of an exploded structure of a battery cell according to some embodiments of this application;
FIG. 4 is a schematic cross-sectional view of a partial structure of a battery cell according to some embodiments of this application;
FIG. 5 is a schematic structural front view of an adhesive film according to some embodiments of this application;
FIG. 6 is a schematic diagram of an exploded structure of a battery cell according to some embodiments of this application;
FIG. 7 is a schematic diagram of an exploded structure of a battery cell according to some embodiments of this application;
FIG. 8 is a schematic diagram of a three-dimensional structure of a battery cell according to some embodiments of this application;
FIG. 9 is a schematic diagram of an exploded structure of a battery cell according to some embodiments of this application;
FIG. 10 is a schematic structural top view of a first insulating member according to some embodiments of this application;
FIG. 11 is a schematic structural front view of a first insulating member according to some embodiments of this application;
FIG. 12 is a schematic structural front view of a battery cell according to some embodiments of this application;
FIG. 13 is a schematic structural bottom view of a battery cell according to some embodiments of this application;
FIG. 14 is a schematic structural cross-sectional view along direction X1-X1 in FIG. 13;
FIG. 15 is a schematic structural cross-sectional view along direction X2-X2 in FIG. 13;
FIG. 16 is a schematic cross-sectional view of a partial structure of a battery cell according to some embodiments of this application;
FIG. 17 is a schematic cross-sectional view of a partial structure of a battery cell according to some embodiments of this application;
FIG. 18 is a schematic exploded diagram of a battery cell according to some embodiments of this application; and
FIG. 19 is a schematic cross-sectional view of a partial structure of a battery cell according to some embodiments of this application.

Description of reference signs: 10. battery cell; 100. housing; 101. first through hole; 110. bottom wall; 121. first side wall; 122. second side wall; 123. third side wall; 124. fourth side wall; 200. housing cover; 300. pressure relief mechanism; 310. adhesive film; 311. first adhesive layer; 312. second adhesive layer; 313. third adhesive layer; 320. first metal sheet; 330. adhesive film; 340. second metal sheet; 400. pole; 500. housing; 501. first through hole; 502. second through hole; 510. bottom wall; 520. first side wall; 610. pole; 620. first insulating member; 621. groove; 622. third through hole; 630. adapter; 631. fourth through hole; 640. second insulating member; 641. fifth through hole; 710. adhesive film; 720. adhesive film; 721. first adhesive segment; 722. second adhesive segment; 730. adhesive film; 731. first adhesive segment; 732. second adhesive segment; 733. third adhesive segment; 740. metal sheet; and 20. enclosure.

### DESCRIPTION OF EMBODIMENTS

To make the objectives, technical solutions, and advantages of this application clearer, the following clearly describes the technical solutions in some embodiments of this application with reference to the accompanying drawings in some embodiments of this application. Apparently, some embodiments described are some rather than all embodiments of this application. All other embodiments obtained by persons of ordinary skill in the art based on some embodiments of this application shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In some embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in some embodiments of this application are merely for illustrative purposes and should not constitute any limitations on this application.

In this application, each battery cell may be a secondary battery or a primary battery. For example, the battery cell may be a lithium-ion battery, a sodium-ion battery, a magnesium-ion battery, or the like. This is not limited in some embodiments of this application. The battery cell may be cylindrical, flat, cuboid, or of other shapes, which is not limited in some embodiments of this application either.

The electrode assembly may be a wound structure or a stacked structure. However, embodiments of this application are not limited thereto.

The inventor has found that for general steel-shell battery cells, laser engraving is mainly performed on housing covers to create engraved grooves, such that these grooves can rupture when the internal pressure of the battery cell becomes excessively high, so as to form a pressure relief channel and release the gas inside the battery cell. This can prevent explosion and improve the safety of the battery cell. However, in order to ensure smooth discharge of gas from the battery cell after the engraved grooves rupture, it is generally necessary to reserve valve opening spaces in portions of the electric apparatus corresponding to the engraved grooves. Additionally, the housing cover is the largest side surface of the housing of the battery cell, and the engraved groove is also relatively long. Therefore, in order to reserve space between the housing cover and other components, a large space in the electric apparatus is occupied. Moreover, the engraved grooves rupture mainly due to the internal pressure of the battery cell, with poor thermal sensitivity. This results in a low pass rate in thermal box testing, impacting the safety of the battery cell. Additionally, and the laser-engraved grooves also increase the preparation costs of the battery cell.

Based on the foregoing consideration, to address the current problems of an excessively large space occupied, low safety of pressure relief for the battery cell, and high preparation costs that are caused by pressure relief for the battery cell via engraved grooves, the inventor, after in-depth research, has designed a battery cell. The battery cell includes a housing and a pressure relief mechanism. The housing is provided with a first through hole and the pressure relief mechanism covers the first through hole. The pressure relief mechanism includes an adhesive film, and the adhesive film can be heated and melted to form a pressure relief channel connecting the inside and outside of the housing. The pressure relief mechanism has good thermal sensitivity, allowing for highly reliable pressure relief, thus improving the safety of the battery cell. In addition, as compared with the pressure relief mechanism with engraved grooves, the size of the first through hole in this embodiment is relatively small, without the need to reserve a large space, allowing for a more compacted structure of the electric apparatus and lower preparation costs of the pressure relief mechanism.

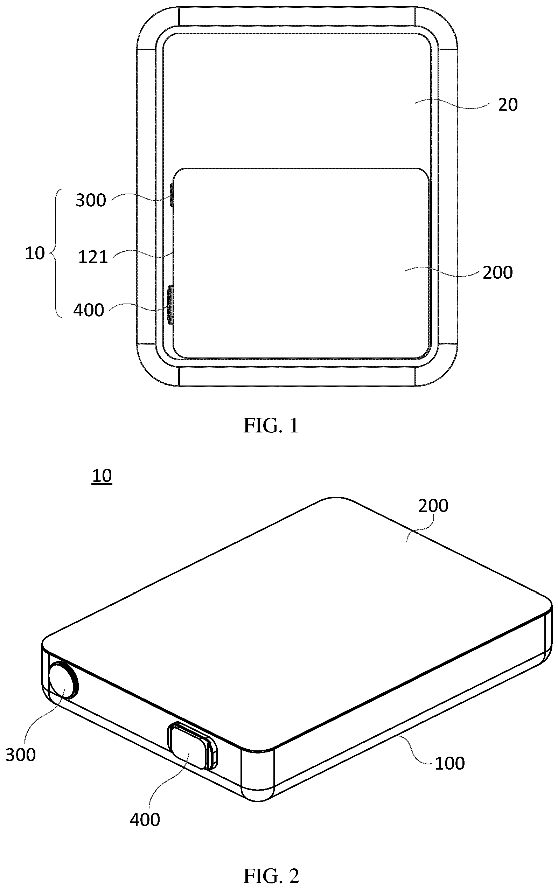

An embodiment of this application provides an electric apparatus that uses a battery cell as a power source. The electric apparatus may be, but is not limited to, a mobile phone, a tablet, a laptop computer, an electric toy, an electric tool, an electric bicycle, an electric car, a ship, or a spacecraft. For example, in FIG. 1, FIG. 1 is a schematic top view of a partial structure of an electric apparatus according to some embodiments of this application. A battery cell 10 is of a cuboid structure and accommodated in an enclosure 20.

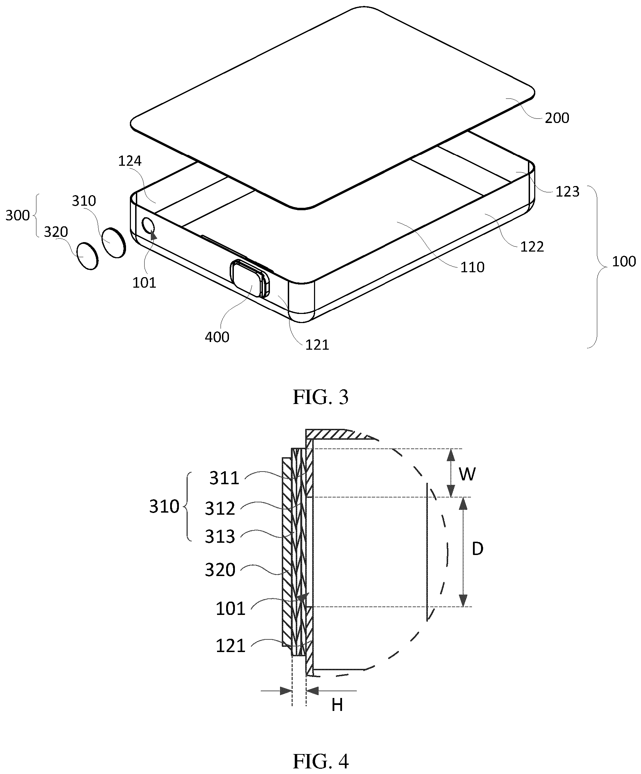

Referring to FIGs. 2 and 3, FIG. 2 is a schematic diagram of a three-dimensional structure of a battery cell according to some embodiments of this application, and FIG. 3 is a schematic diagram of an exploded structure of a battery cell according to some embodiments of this application. The battery cell 10 includes a housing 100, a housing cover 200, an electrode assembly (not shown in the figure), and an electrolyte (not shown in the figure). The housing cover 200 is configured to cover the housing 100, so as to form an accommodating space. The accommodating space is used for accommodating the electrode assembly and the electrolyte. The electrode assembly includes a positive electrode plate, a negative electrode plate, and a separator. Working of the battery cell mainly relies on migration of metal ions between the positive electrode plate and the negative electrode plate.

According to some embodiments of this application, referring to FIGs. 1 to 3, this embodiment of this application provides a battery cell 10. The battery cell 10 includes a housing 100 and a pressure relief mechanism 300. The housing 100 is provided with a first through hole 101, the pressure relief mechanism 300 covers the first through hole 101, and the pressure relief mechanism 300 includes an adhesive film 310. The adhesive film 310 can be heated and melted to form a pressure relief channel connecting the inside and outside of the housing 100.

As the pressure relief mechanism 300 including the adhesive film 310 covers the first through hole 101 of the housing 100, the adhesive film 310 can be heated and melted to form a pressure relief channel connecting the inside and outside of the housing 100. The pressure relief mechanism 300 has good thermal sensitivity, allowing for highly reliable pressure relief, thus improving the safety of the battery cell 10. In addition, as compared with the pressure relief mechanism with engraved grooves, the size of the first through hole 101 in this embodiment is small, without the need to reserve a large space, allowing for a more compacted structure of the electric apparatus. In addition, the preparation of the pressure relief mechanism 300 requires only steps such as drilling and adhesive melting, with lower costs than laser engraving.

In some embodiments, the first through hole 101 may be an electrolyte injection hole, and the electrolyte is injected into the battery cell 10 through the first through hole 101.

The electrolyte injection hole is reused as the first through hole 101 for pressure relief. This can further simplify the preparation process of the battery cell 10 and reduce the drilling step, reducing the preparation costs of the battery cell 10.

In another embodiment, the first through hole 101 may further be another through hole formed in the housing 100.

In some embodiments, the housing 100 includes a bottom wall 110 and multiple side walls surrounding the bottom wall 110. The multiple side walls may include a first side wall 121, a second side wall 122, a third side wall 123, and a fourth side wall 124 that are connected sequentially. The battery cell 10 may further include a pole 400, and the pole 400 and the first through hole 101 are provided on one side wall (for example, the first side wall 121).

When the battery cell 10 are placed in the electric apparatus, a space needs to be reserved for electrical connection between the pole 400 and another component of the electric apparatus, such that the electrode assembly in the housing 100 can be electrically connected to the another components. Therefore, the pole 400 and the first through hole 101 are provided on one side wall, and no space needs to be additionally reserved for the first through hole 101, so as to relieve pressure. In addition, the first side wall 121 may be the smallest one of the multiple walls of the housing 100, thus requiring a smaller spacing reserved. This can further save the space of the electric apparatus, thus allowing for a more compacted structure of the electric apparatus.

Referring to FIG. 4, FIG. 4 is a schematic cross-sectional view of a partial structure of a battery cell according to some embodiments of this application. In some embodiments, the adhesive film 310 is attached to the housing 100, and a portion of the adhesive film 310 attached to the housing 100 has a width of W satisfying 0.2 mm≤W≤2 mm.

With the adhesive film 310 attached to the housing 100, the adhesive film 310 can seal the first through hole 101. In addition, with the width W of the portion of the adhesive film 310 attached to the housing 100 set to be 0.2 mm to 2 mm, the pressure relief path of the battery cell 10 is short when thermal runaway occurs, the battery cell 10 has high pressure relief sensitivity, and it is more reliable for the adhesive film 310 to seal the first through hole 101. If W is small (for example, being smaller than 0.2 mm), it is less reliable for the adhesive film 310 to seal the first through hole 101; and if W is large (for example, being greater than 2 mm), the pressure relief path is long, causing low sensitivity of pressure relief for the battery cell.

Preferably, in a case of 0.3 mm≤W≤1 mm, it is further possible to make the pressure relief path short when thermal runaway occurs in the battery cell 10 and the battery cell 10 have high sensitivity of pressure relief.

In some embodiments, the pressure relief mechanism 300 may further include a first metal sheet 320, the first metal sheet 320, and the adhesive film 310 are stacked along the opening direction (the thickness direction of the first side wall 121) of the first through hole 101, and the first metal sheet 320 is disposed on a side of the adhesive film 310 back away from the housing 100.

Due to the permeability of the adhesive film 310 which is a polymer, water can enter the housing 100 through the adhesive film 310, causing adverse effects on the electrode assembly and electrolyte. The first metal sheet 320 being disposed on the side of the adhesive film 310 back away from the housing 100 can reduce the water infiltration area of the adhesive film 310, allowing for a better sealing effect.

In some embodiments, the adhesive film 310 may be made of polypropylene, with good flexibility and chemical resistance.

In some embodiments, the first metal sheet 320 may be made of materials such as aluminum, nickel, and stainless steel, is less prone to rusting, and has a long service life.

In some embodiments, the first metal sheet 320, the adhesive film 310, and the first through hole 101 may be circular.

The first metal sheet 320 being circular facilitates the assembly between the first metal sheet 320 and the adhesive film 310 without the need to adjust the assembly direction. With the adhesive film 310 being circular, the adhesive film 310 can be assembled in the circular first through hole 101, and when the circle center of the adhesive film 310 is collinear with the circle center of the first through hole 101, the attached surface between the adhesive film 310 and the housing 100 is distributed uniformly, allowing for a better sealing effect and facilitating the assembly of the adhesive film 310.

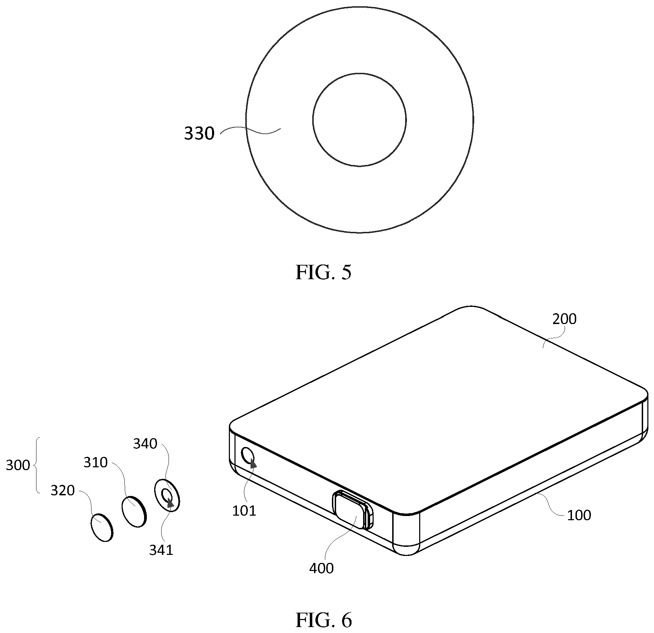

Referring to FIG. 5, FIG. 5 is a schematic structural front view of an adhesive film according to some embodiments of this application. In some embodiments, the first metal sheet 320 may be circular, and the adhesive film 330 may also be circular.

With the adhesive film 330 being circular, pressure relief channels can be formed between the adhesive film 330 and the housing 100 as well as between the adhesive film 330 and the first metal sheet 320, thus increasing the quantity of the pressure relief channels, allowing for a better pressure relief effect.

Still referring to FIGs. 1 to 3, in some embodiments, the first through hole 101 is circular, the diameter of the first metal sheet 320 is smaller than or equal to the outer diameter of the adhesive film 310, and the diameter of the first metal sheet 320 is greater than the diameter of the first through hole 101.

The diameter of the first metal sheet 320 being smaller than or equal to the outer diameter of the adhesive film 310 is further conducive to the assembly between the first metal sheet 320 and the adhesive film 310. The diameter of the first metal sheet 320 being greater than the diameter of the first through hole 101 allows the first metal sheet 320 to completely cover the first through hole 101, allowing for a better sealing effect and a better effect of blocking water.

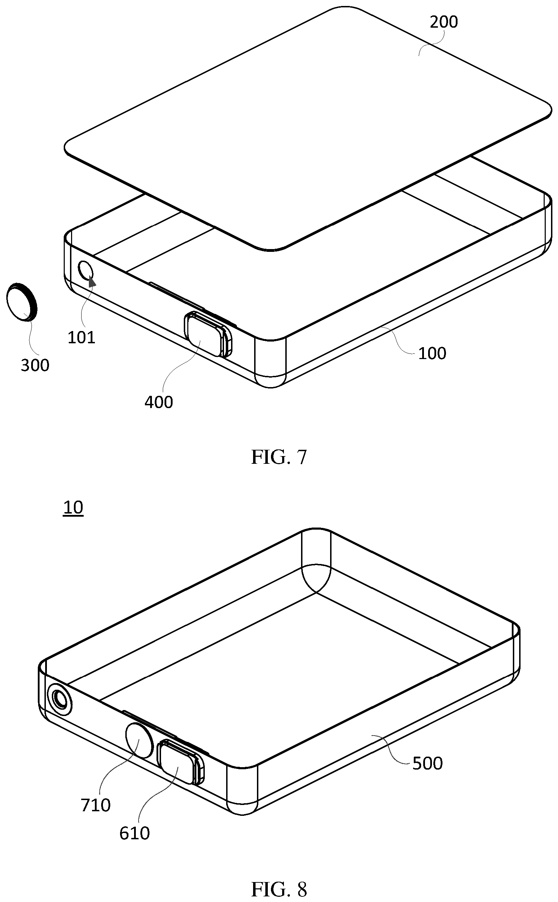

Referring to FIGs. 6 and 7, FIG. 6 is a schematic diagram of an exploded structure of a battery cell according to some embodiments of this application, and FIG. 7 is a schematic diagram of an exploded structure of a battery cell according to some embodiments of this application. In some embodiments, the pressure relief mechanism 300 may further include a second metal sheet 340, where the second metal sheet 340 is disposed between the adhesive film 310 and the housing 100, the second metal sheet 340 is welded to the housing 100, and the second metal sheet 340 is provided with a second through hole 341.

Due to the reuse of the first through hole 101 as an electrolyte injection hole, after the injection of the electrolyte into battery cell 10, there may be residual electrolyte at the electrolyte injection hole, affecting the adhesion of the adhesive film 310, and resulting in poor bonding between the adhesive film 310 and the housing 100. The second metal sheet 340 being welded to housing 100 allows for more stable connection between pressure relief mechanism 300 and the housing 100, allowing for a better sealing effect.

In some embodiments, the adhesive film 310 may be attached to both the first metal sheet 320 and the second metal sheet 340, so as to form the pressure relief mechanism 300. Then, the pressure relief mechanism 300 is welded to the housing 100, making the preparation process simpler.

In another embodiment, the first metal sheet 320, the adhesive film 310, and the second metal sheet 340 may be stacked, and then when the second metal sheet 340 is welded to the housing 100, the adhesive film 310 is melted under high welding temperature, so as to attach the adhesive film 310 to the first metal sheet 320 and the second metal sheet 340 synchronously.

In some embodiments, the second metal sheet 340 is annular.

The second metal sheet 340 being annular allows for the formation of a pressure relief channel with a large area in the second metal sheet 340, thus allowing for a better pressure relief effect.

Referring to FIG. 4, in some embodiments, the adhesive film 310 may include a first adhesive layer 311 and a second adhesive layer 312. The first adhesive layer 311 and the second adhesive layer 312 are stacked along the opening direction of the first through hole 101, the second adhesive layer 312 is on a side of the first adhesive layer 311 back away from the housing 100, and the melting point of the first adhesive layer 311 is lower than the melting point of the second adhesive layer 312.

As the first adhesive layer 311 and the second adhesive layer 312 are provided and the melting point of the first adhesive layer 311 is lower than the melting point of the second adhesive layer 312, when the adhesive film 310 is activated by high temperature, the first adhesive layer 311 can be melted to attach to the housing 100, and the second adhesive layer 312 is not melted, preventing the overmelting of the adhesive film 310 from impacting the mounting of the adhesive film 310 and reducing the amount of adhesive overflow.

In some embodiments, the melting point of the first adhesive layer 311 may be T1 satisfying 100°C≤T1≤130°C.

With the melting point of the first adhesive layer 311 set form 100°C to 130°C, when thermal runaway occurs in the battery cell 10, the first adhesive layer 311 can be melted to form the pressure relief channel. If T1 is low (for example, being lower than 100°C), the first adhesive layer 311 may be melted before thermal runaway has not occurred in the battery cell 10, resulting in low reliability of the adhesive film 310 for sealing the first through hole 101. If T1 is high (for example, being higher than 130°C), the first adhesive layer 311 is less likely to melt when thermal runaway occurs in the battery cell 10, causing low sensitivity of pressure relief for the battery cell 10.

Preferably, in a case of 110°C≤T1≤125°C, it is more accurate to control thermal runaway of the battery cell 10.

In some embodiments, the melting point of the second adhesive layer 312 is T2 satisfying 140°C≤T2≤190°C.

With the melting point of the second adhesive layer 312 set to be 140°C to 190°C, when the first adhesive layer 311 is melted, the second adhesive layer 312 is not melted. If T2 is low (for example, being lower than 140°C), when the adhesive film 310 is activated by high temperature, the first adhesive layer 311 and the second adhesive layer 312 may be melted simultaneously into one, making it difficult to mount the adhesive film 310. If T2 is high (for example, being higher than 190°C), the second adhesive layer 312 is also less likely to melt when thermal runaway occurs in the battery cell 10, causing low sensitivity of pressure relief for the battery cell 10.

Preferably, in case of 150°C≤T2≤170°C, it is more accurate to control thermal runaway of the battery cell 10.

In some embodiments, the adhesive film 310 may further include a third adhesive layer 313. The third adhesive layer 313 is located between the second adhesive layer 312 and the first metal sheet 320, and the melting point of the third adhesive layer 313 is lower than the melting point of the second adhesive layer 312.

As the third adhesive layer 313 is provided and the melting point of the third adhesive layer 313 is lower than the melting point of the second adhesive layer 312, when the adhesive film 310 is activated by high temperature, the third adhesive layer 313 can be melted to attach to the first metal sheet 320, and the second adhesive layer 312 is not melted, preventing the overmelting of the adhesive film 310 from impacting the mounting of the first metal sheet 320 and reducing the amount of adhesive overflow.

In some embodiments, the melting point of the third adhesive layer 313 is T3 satisfying 100°C≤T3≤130°C.

With the melting point of the third adhesive layer 313 set form 100°C to 130°C, when thermal runaway occurs in the battery cell 10, the third adhesive layer 313 can be melted to form the pressure relief channel between it and the first metal sheet 320. If T3 is low (for example, being lower than 100°C), the third adhesive layer 313 may be melted before thermal runaway has not occurred in the battery cell 10, resulting in low reliability of the adhesive film 310 for sealing the first through hole 101. If T3 is high (for example, being higher than 130°C), the third adhesive layer 313 is less likely to melt when thermal runaway occurs in the battery cell 10, causing low sensitivity of pressure relief for the battery cell 10.

Preferably, in a case of 110°C≤T3≤125°C, it is more accurate to control thermal runaway of the battery cell 10.

In some embodiments, the adhesive film 310 may have a thickness of H satisfying 0.05 mm≤H≤1 mm.

With the thickness of the adhesive film 310 set to be 0.05 mm to 1 mm, the adhesive film 310 is not easily damaged and permeable, and has a good pressure relief effect. If H is small (for example, being smaller than 0.05 mm), the adhesive film 310 is easily damaged and highly permeable. If H is large (for example, being greater than 1 mm), the adhesive film 310 is less likely to melt when thermal runaway occurs in the battery cell 10, causing low sensitivity of pressure relief for the battery cell 10.

Preferably, in a case of 0.1 mm≤H≤0.3 mm, it is further possible that the adhesive film 310 is not easily damaged and permeable, and has a good pressure relief effect, and thus it is more accurate to control thermal runaway of the battery cell 10.

In some embodiments, a thickness ratio of the first adhesive layer 311, the second adhesive layer 312, and the third adhesive layer 313 may be 1:0.5:1 to 1:3:1.

As the thickness ratio of the first adhesive layer 311, the second adhesive layer 312, and the third adhesive layer 313 is set to be 1:0.5:1 to 1:3:1, the second adhesive layer 312 can provide good support, with a small effect on the pressure relief of the adhesive film 310. If the second adhesive layer 312 is thin (for example, being smaller than half thickness of the first adhesive layer 311), the second adhesive layer 312 cannot provide good support, which does not help an adhesive application apparatus (not shown in the figure) provide support for the second adhesive layer 312 in the process of melting the first adhesive layer 311, where such support avoids displacement of the adhesive film 310, and the second adhesive layer 312 is easy to damage. If the second adhesive layer 312 is thick (for example, being greater than three times the thickness of the first adhesive layer), the melting of the first adhesive layer 311 may be affected, thus impacting the sensitivity of pressure relief for the battery cell 10.

In some embodiments, the first through hole 101 is circular, and the first through hole 101 has a diameter of D satisfying 0.5 mm≤D≤2 mm.

With the diameter of the first through hole 101 set to be 0.5 mm to 2 mm, when thermal runaway occurs in the battery cell 10, the first through hole 101 can provide a pressure relief channel with a large cross-section area, facilitating the mounting of the pressure relief mechanism 300. If D is small (for example, being smaller than 0.5 mm), the pressure relief channel formed by melting the adhesive film 310 when thermal runaway occurs in the battery cell 10 has a small cross-section area, and the gas in the housing 100 may be not released in a timely manner, causing low safety of the pressure relief for the battery cell 10. If D is large (for example, being greater than 2 mm), a pressure relief mechanism 300 with a large area is required to cover the first through hole 101, and the adhesive film 310 is made of a flexible material with weak support force, making it difficult to mount the pressure relief mechanism 300.

Preferably, in a case of 0.9 mm≤D≤1.6 mm, it is further possible that when thermal runaway occurs in the battery cell, the first through hole 101 can provide a pressure relief channel with a large cross-section area, facilitating the mounting of the pressure relief mechanism 300.

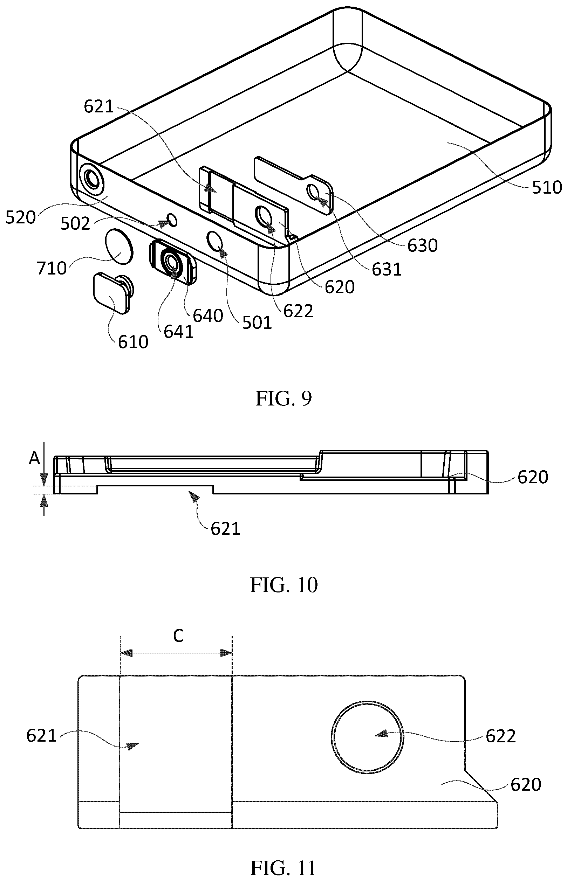

Referring to FIGs. 8 and 9, FIG. 8 is a schematic diagram of a three-dimensional structure of a battery cell according to some embodiments of this application, and FIG. 9 is a schematic diagram of an exploded structure of a battery cell according to some embodiments of this application. The battery cell 10 includes a housing 500, a pole 610, and a pressure relief mechanism. The housing 500 includes a bottom wall 510 and multiple side walls surrounding the bottom wall 510. The first side wall 520 among the multiple side walls is provided with a first through hole 501 and a second through hole 502. The pole 610 penetrates through the first through hole 501, and the pressure relief mechanism covers the second through hole 502. The pressure relief mechanism includes an adhesive film 710, where the adhesive film 710 can be melted when the temperature of the battery cell 10 reaches a threshold, so as to relieve the pressure in the housing 100 via the second through hole 502.

As the pressure relief mechanism including the adhesive film 710 covers the second through hole 502 of the housing 500, the adhesive film 710 can be melted when the temperature of the battery cell 10 reaches the threshold, so as to relieve the pressure in the housing 500 via the second through hole 502. The pressure relief mechanism has good thermal sensitivity, allowing for highly reliable pressure relief, thus improving the safety of the battery cell 10. In addition, the second through hole 502 and the first through hole 501 for mounting the pole 610 are both located in the first side wall 520, such that the pressure relief mechanism can reserve a space for the pole 610. This can save the space for the electric apparatus mounted with the battery cell 10, allowing for a more compacted structure of the electric apparatus and lower preparation costs of the pressure relief mechanism.

In some embodiments, the battery cell 10 may further include a first insulating member 620. The first insulating member 620 is located on an inner side of the first side wall 520, the first insulating member 620 is connected to the pole 610, and the first insulating member 620 is provided with a channel connecting an inner space of the housing 500 to the pressure relief mechanism.

As the first insulating member 620 is provided with the channel connecting the inner space of the housing 500 to the pressure relief mechanism, the second through hole 502 is less likely to be blocked during the pressure relief, allowing for a better pressure relief effect and higher safety of the pressure relief for the battery cell.

In some embodiments, the channel is a groove 621 provided on a side of the first insulating member 620 facing the first side wall 520, and at least one end of the groove 621 extends to the edge of the first insulating member 620.

The channel being a groove 621 provided on a side of the first insulating member 620 facing the first side wall 520 allows for a shorter distance between the second through hole 502 and the channel, further reducing the possibility of blocking the channel, thus allowing for a better pressure relief effect and higher safety of pressure relief for the battery cell.

In some embodiments, the channel runs through the first insulating member 620 along a width direction of the first insulating member 620.

In this way, air from two sides of the first insulating member 620 in the width direction of the first insulating member 620, which is a thickness direction of the bottom wall 510, can both flow to the second through hole 502 via the channel, allowing for faster air flow during pressure relief. In addition, pressure relief can be still achieved when either side of the first insulating member 620 in the width direction of the first insulating member 620 is blocked, allowing for more reliable pressure relief for the battery cell 10.

Referring to FIG. 10, FIG. 10 is a schematic structural top view of a first insulating member according to some embodiments of this application. In some embodiments, in the opening direction (that is, the thickness direction of the first side wall 520) of the second through hole 502, the channel has a depth of A satisfying 0.05 mm≤A≤0.5 mm.

As the depth A of the channel is set to be 0.05 mm to 0.5 mm in the opening direction of the second through hole 502, the first insulating member 620 does not occupy an excessive space in the housing 500, and the channel has a large cross-section area, allowing for a high pressure relief speed. If A is small (for example, being smaller than 0.05 mm), the channel has a small cross-section area and is easy to block, and an excessively low speed of the pressure relief affects the safety of the pressure relief. If A is large (for example, being greater than 0.5 mm), the first insulating member 620 is of an excessively large size, occupying a large space in the housing 500 and extruding the mounting space for the other components in the housing 500.

Preferably, in a case of 0.1 mm≤A≤0.2 mm, the channel has a large cross-section area, with no excessive space occupied in the housing 500.

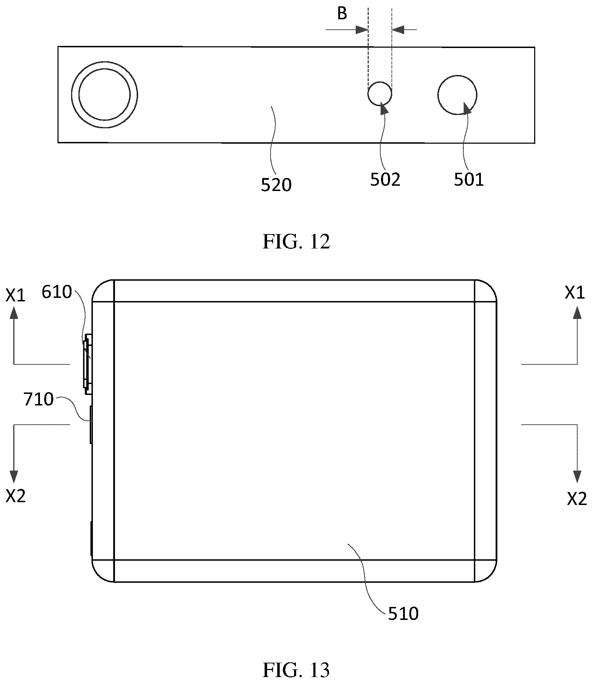

Referring to FIGs. 11 and 12, FIG. 11 is a schematic structural front view of a first insulating member according to some embodiments of this application, and FIG. 12 is a schematic structural front view of a battery cell according to some embodiments of this application. In some embodiments, the second through hole 502 has a diameter B in a spacing direction between the first through hole 501 and the second through hole 502, and the channel has a width C in the spacing direction between the first through hole 501 and the second through hole 502, where B and C satisfy 0.8*B≤C.

C being greater than or equal to 0.8*B allows for a large communication area between the channel and the second through hole 502 and a high pressure relief speed. If C is small (for example, being small than 0.8*B), the channel has a small communication area with the second through hole 502 and thus is easy to block, causing an excessively low speed, which affects the safety of the pressure relief.

Preferably, in a case of B≤C≤2*B, it is further possible to make the communication surface between the channel and the second through hole 502 large.

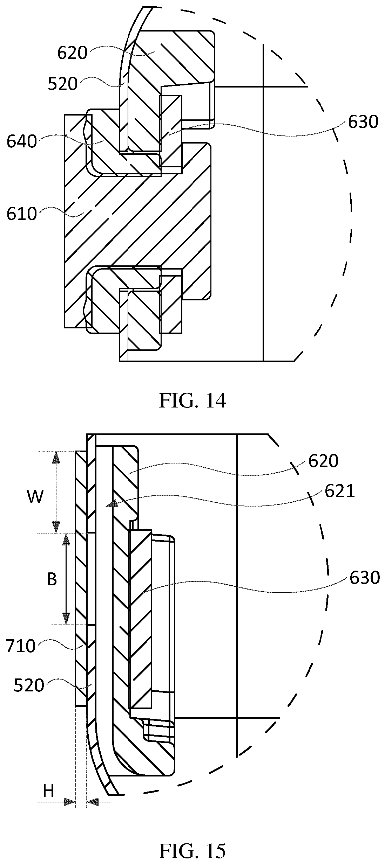

Referring to FIGs. 9, 13, and 15, FIG. 13 is a schematic structural bottom view of a battery cell according to some embodiments of this application; FIG. 14 is a schematic structural cross-sectional view along direction X1-X1 in FIG. 13; and FIG. 15 is a schematic structural cross-sectional view along direction X2-X2 in FIG. 13. In some embodiments, the battery cell 10 further includes an electrode assembly (not shown in the figure) and an adapter 630, the electrode assembly and the adapter 630 being both disposed in the housing 500. The adapter 630 is configured to electrically connect the electrode assembly to the pole 610, the first insulating member 620 is located between the first side wall 520 and the adapter 630, the first insulating member 620 is provided with a third through hole 622, the adapter 630 is provided with a fourth through hole 631, and the pole 610 penetrates through the third through hole 622 and the fourth through hole 631 to be riveted to the adapter 630.

As the pole 610 penetrates through the first insulating member 620 and the adapter 630 to be riveted to the adapter 630, the pole 610 is connected to the adapter 630 more stably, and the first insulating member 620 can insulate and isolate the adapter 630 from the housing 500.

In some embodiments, the battery cell 10 may further include a second insulating member 640, the second insulating member 640 is at least partially located outside the first side wall 520, the second insulating member 640 is provided with a fifth through hole 641, and the pole 610 penetrates through the fifth through hole 641.

As the pole 610 penetrates through the second insulating member 640, the second insulating member 640 can insulate and isolate the pole 610 from the housing 500.

In some embodiments, the melting point of the adhesive film 710 is T satisfying 100°C≤T≤190°C.

With the melting point T of the adhesive film 710 set to be 100°C to 190°C, when thermal runaway occurs in the battery cell 10, the adhesive film 710 can be melted to relieve the pressure in the housing 500. If T is low (for example, being lower than 100°C), the adhesive film 710 may be melted before thermal runaway has not occurred in the battery cell 10, resulting in low reliability of the adhesive film 710 for sealing the second through hole 502. If T is high (for example, being higher than 190°C), the adhesive film 710 is less likely to melt when thermal runaway occurs in the battery cell, causing low sensitivity of pressure relief for the battery cell 10.

Preferably, as 100°C≤T≤130°C, it is more accurate to control thermal runaway of the battery cell 10.

In some embodiments, the adhesive film 710 has a thickness of H satisfying 0.05 mm≤H≤0.5 mm.

With the thickness H of the adhesive film 710 set to be 0.05 mm to 0.5 mm, the adhesive film 710 is not easily damaged and permeable, and has a good pressure relief effect. If H is small (for example, being smaller than 0.05 mm), the adhesive film 710 is easily damaged and highly permeable. If H is large (for example, being greater than 0.5 mm), the adhesive film 710 is less likely to melt when thermal runaway occurs in the battery cell 10, causing low sensitivity of pressure relief for the battery cell 10.

Preferably, in a case of 0.1 mm≤H≤0.3 mm, it is more accurate to control thermal runaway of the battery cell 10.

In some embodiments, the second through hole 502 may be circular, and the second through hole 502 has a diameter of B satisfying 0.5 mm≤B≤3 mm.

With the diameter B of the second through hole 502 set to be 0.5 mm to 3 mm, when thermal runaway occurs in the battery cell 10, the second through hole 502 can provide a pressure relief channel with a large cross-section area, facilitating the mounting of the pressure relief mechanism. If B is small (for example, being smaller than 0.5 mm), the pressure relief channel formed by melting the adhesive film 710 when thermal runaway occurs in the battery cell 10 has a small cross-section area, and the gas in the housing 500 may be not released in a timely manner, causing low safety of the pressure relief for the battery cell 10. If B is large (for example, being greater than 3 mm), a pressure relief mechanism with a large area is required to cover the second through hole 502, and the adhesive film 710 is made of a flexible material with weak support force, making it difficult to mount the pressure relief mechanism.

Preferably, 0.9 mm≤B≤1.6 mm, it is further possible to provide a pressure relief channel with a large cross-section area, facilitating the mounting of the pressure relief mechanism.

In some embodiments, the portion of the pressure relief mechanism attached to the first side wall 520 is W, satisfying 0.2 mm≤W≤2 mm.

With the width W of the portion of the adhesive film 710 attached to the first side wall 520 set to be 0.2 mm to 2 mm, the pressure relief path is short when thermal runaway occurs in the battery cell 10, the battery cell 10 has high pressure relief sensitivity, and it is more reliable for the adhesive film 710 to seal the second through hole 502. If W is small (for example, being smaller than 0.2 mm), it is less reliable for the adhesive film 710 to seal the second through hole 502; and if W is large (for example, being greater than 2 mm), the pressure relief path is long, causing low sensitivity of pressure relief for the battery cell 10.

Preferably, in a case of 0.3 mm≤W≤1 mm, it is further possible to make the pressure relief path short when thermal runaway occurs in the battery cell 10 and the battery cell 10 have high sensitivity of pressure relief.

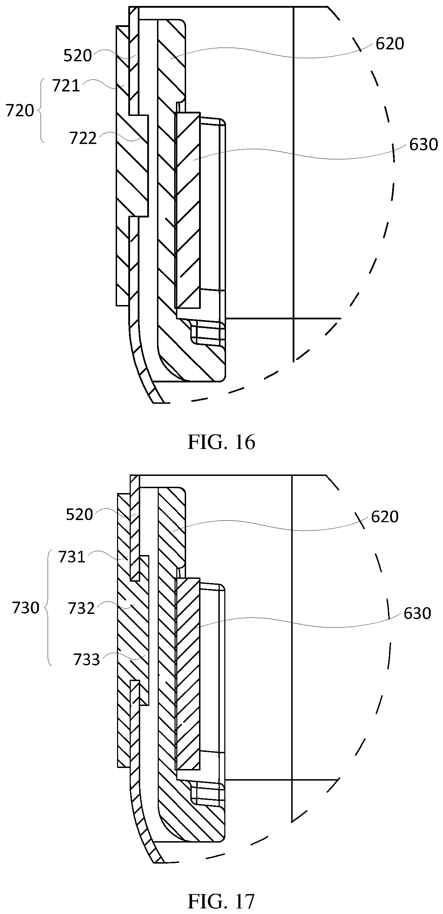

Referring to FIG. 16, FIG. 16 is a schematic cross-sectional view of a partial structure of a battery cell according to some embodiments of this application. In some embodiments, the adhesive film 720 can include a first adhesive segment 721 and a second adhesive segment 722 that are connected to each other, where the first adhesive segment 721 is located outside the first side wall 520, and the second adhesive segment 722 is at least partially located in the second through hole 502.

As the adhesive film 720 is divided into the first adhesive segment 721 and the second adhesive segment 722 and the second adhesive segment 722 is at least partially located in the second through hole 502, the first adhesive segment 721 can be tightly attached to the housing 500, and the second adhesive segment 722 can block the second through hole 502, allowing for a better sealing effect on the second through hole 502.

Referring to FIG. 17, FIG. 17 is a schematic cross-sectional view of a partial structure of a battery cell according to some embodiments of this application. In some embodiments, the adhesive film 730 may further include a first adhesive segment 731, a second adhesive segment 732, and a third adhesive segment 733 that are sequentially connected. The first adhesive segment 731 is located outside the first side wall 520, the second adhesive segment 732 is located in the second through hole 502, and the third adhesive segment 733 is located on an inner side of the first side wall 520.

As the adhesive film 730 is divided into three adhesive segments and the third adhesive segment 733 is located on the inner side of the first side wall 520, the adhesive film 730 can be fixed to the housing 500 better, achieving better reliability of sealing the second through hole 502.

In some embodiments, the size of the third adhesive segment 733 in the thickness direction of the bottom wall 510 is greater than the size of the second adhesive segment 732 in the thickness direction of the bottom wall 510, further making the adhesive film 730 less likely to fall off, and achieving better reliability of sealing the second through hole 502.

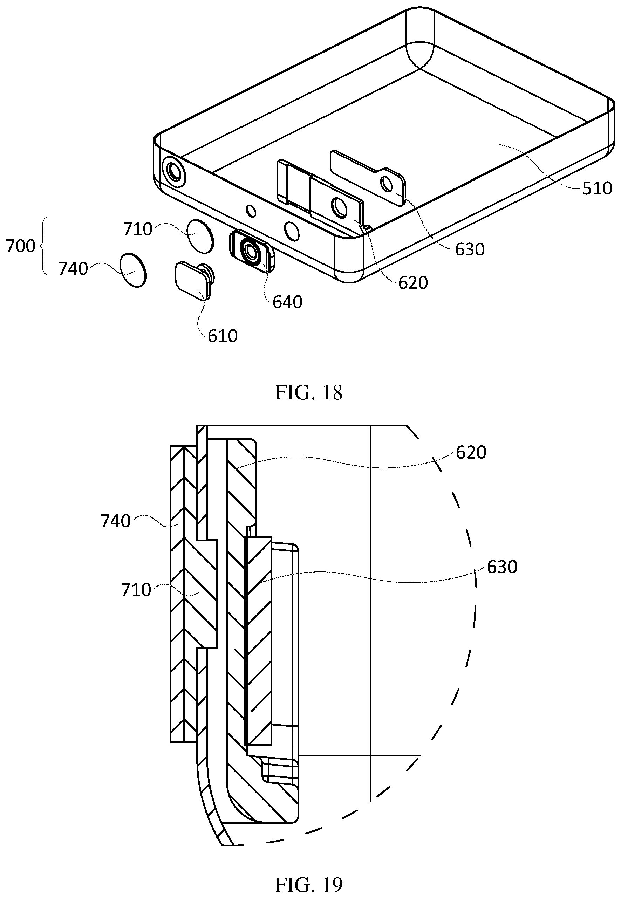

Referring to FIGs. 18 and 19, FIG. 18 is a schematic exploded diagram of a battery cell according to some embodiments of this application; and FIG. 19 is a schematic cross-sectional view of a partial structure of a battery cell according to some embodiments of this application. In some embodiments, the pressure relief mechanism 700 includes an adhesive film 710 and a metal sheet 740 that are stacked along the opening direction of the second through hole 502, the metal sheet 740 being disposed on a side of the adhesive film 710 back away from the housing 500.

Due to the permeability of the adhesive film 710, water can enter the housing 500 through the adhesive film 710, causing adverse effects on the electrode assembly and electrolyte. The first metal sheet 740 being disposed on the side of the adhesive film 710 back away from the housing 500 can reduce the water infiltration area of the adhesive film 710, allowing for a better sealing effect.

Referring to FIG. 1, according to some embodiments of this application, an embodiment of this application further provides an electric apparatus, including the battery cell 10 in any one of the foregoing solutions, where the battery cell 10 is configured to supply electric energy to the electric apparatus.

The electric apparatus may be any one of the foregoing apparatuses or devices using the battery cell 10.

It should be noted that, without conflict, some embodiments and features in these embodiments of this application may be combined with each other.

The foregoing descriptions are merely exemplary embodiments of this application, but are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a housing, wherein the housing is provided with a first through hole; and
a pressure relief mechanism covering the first through hole, wherein the pressure relief mechanism comprises an adhesive film, the adhesive film being capable of being heated and melted to form a pressure relief channel connecting the inside and outside of the housing.

2. The battery cell according to claim 1, wherein the first through hole is an electrolyte injection hole.

3. The battery cell according to claim 1, wherein the housing comprises a bottom wall and multiple side walls surrounding the bottom wall, the battery cell further comprises a pole, and the pole and the first through hole are provided on one of the side walls.

4. The battery cell according to claim 1, wherein the adhesive film is attached to the housing, and a portion of the adhesive film attached to the housing has a width of W satisfying 0.2 mm≤W≤2 mm.

5. The battery cell according to claim 4, wherein 0.3 mm≤W≤1 mm.

6. The battery cell according to claim 1, wherein the pressure relief mechanism further comprises a first metal sheet, the first metal sheet being disposed on a side of the adhesive film back away from the housing.

7. The battery cell according to claim 6, wherein the first metal sheet is circular, and the adhesive film is circular or annular.

8. The battery cell according to claim 6, wherein the first through hole is circular, diameter of the first metal sheet is smaller than or equal to outer diameter of the adhesive film, and the diameter of the first metal sheet is greater than diameter of the first through hole.

9. The battery cell according to claim 1, wherein the pressure relief mechanism further comprises a second metal sheet, wherein the second metal sheet is disposed between the adhesive film and the housing, the second metal sheet is welded to the housing, and the second metal sheet is provided with a second through hole.

10. The battery cell according to claim 6, wherein the adhesive film comprises a first adhesive layer and a second adhesive layer, wherein the first adhesive layer and the second adhesive layer are stacked, the second adhesive layer is located on a side of the first adhesive layer back away from the housing, and a melting point of the first adhesive layer is lower than a melting point of the second adhesive layer.

11. The battery cell according to claim 10, wherein the melting point of the first adhesive layer is T1 satisfying 100°C≤T1≤130°C.

12. The battery cell according to claim 11, wherein 110°C≤T1≤125°C.

13. The battery cell according to claim 10, wherein the melting point of the second adhesive layer is T2 satisfying 140°C≤T2≤190°C.

14. The battery cell according to claim 13, wherein 150°C≤T2≤170°C.

15. The battery cell according to claim 10, wherein the adhesive film further comprises a third adhesive layer, wherein the third adhesive layer is located between the second adhesive layer and the first metal sheet, and a melting point of the third adhesive layer is lower than the melting point of the second adhesive layer.

16. The battery cell according to claim 15, wherein the melting point of the third adhesive layer is T3 satisfying 100°C≤T3≤130°C.

17. The battery cell according to claim 16, wherein 110°C≤T3≤125°C.

18. The battery cell according to claim 1, wherein the adhesive film has a thickness of H satisfying 0.05 mm≤H≤1 mm.

19. The battery cell according to claim 18, wherein 0.1 mm≤H≤0.3 mm.

20. The battery cell according to claim 19, wherein a thickness ratio of the first adhesive layer, the second adhesive layer, and the third adhesive layer is 1:0.5:1 to 1:3:1.

21. The battery cell according to claim 1, wherein the first through hole is circular, and the first through hole has a diameter of D satisfying 0.5 mm≤D≤2 mm.

22. The battery cell according to claim 21, wherein 0.9 mm≤D≤1.6 mm.

23. A pressure relief mechanism, wherein the pressure relief mechanism comprises:
an adhesive film;
a first metal sheet disposed on a side of the adhesive film; and
a second metal sheet disposed on a side of the adhesive film back away from the first metal sheet;
wherein the pressure relief mechanism is configured to relieve pressure of a battery cell.

24. The pressure relief mechanism according to claim 23, wherein a melting point of the adhesive film is 100°C-130°C.

25. The pressure relief mechanism according to claim 23, wherein the adhesive film comprises a first adhesive layer and a second adhesive layer, wherein the first adhesive layer and the second adhesive layer are stacked, the second adhesive layer is located on a side of the first adhesive layer back away from the housing, and a melting point of the first adhesive layer is lower than a melting point of the second adhesive layer.

26. The pressure relief mechanism according to claim 25, wherein the adhesive film further comprises a third adhesive layer, wherein the third adhesive layer is located between the second adhesive layer and the first metal sheet, and a melting point of the third adhesive layer is lower than the melting point of the second adhesive layer.

27. The pressure relief mechanism according to claim 26, wherein the first adhesive layer, the second adhesive layer, and the third adhesive layer satisfy at least one of the following conditions:
(1) the melting point of the first adhesive layer is T1 satisfying 100°C≤T1≤130°C;
(2) the melting point of the second adhesive layer is T2 satisfying 140°C≤T2≤190°C; or
(3) the melting point of the third adhesive layer is T3 satisfying 100°C≤T3≤130°C.

28. An electric apparatus, comprising the battery cell according to any one of claims 1 to 22, wherein the battery cell is configured to supply electric energy.
